# EUROPÄISCHE PATENTSCHRIFT

(11) **EP 1 154 840 B1**
(45) Veröffentlichungstag und Bekanntmachung des Hinweises auf die Patenterteilung: **02.07.2003**
(21) Anmeldenummer: 00904991.7
(22) Anmeldetag: 31.01.2000
(51) Int. Cl.: B01D 63/16, B01D 61/14

(54) **VERFAHREN ZUR QUERSTROMFILTRATION**
METHOD FOR CROSS-FLOW FILTRATION
PROCEDE DE FILTRATION A FLUX TRANSVERSAL

(30) Priorität: 08.02.1999 AT 15599
(43) Veröffentlichungstag der Anmeldung: 21.11.2001
(73) Patentinhaber: Andritz AG, 8045 Graz (AT)
(72) Erfinder: ZEGG, Herbert, A-8112 Gratwein (AT)
(74) Vertreter: Schweinzer, Friedrich
(86) Internationale Anmeldenummer: EP0000750
(87) Internationale Veröffentlichungsnummer: WO00047312

(56) Entgegenhaltungen:
- PATENT ABSTRACTS OF JAPAN vol. 1995, no. 06, 31. Juli 1995 (1995-07-31) -& JP 07 075722 A (AGENCY OF IND SCIENCE & TECHNOL;OTHERS: 01), 20. März 1995 (1995-03-20) -& DATABASE WPI Derwent Publications Ltd., London, GB; AN 1995-151532 XP002141212
- RIPPERGER S.: "Mikrofiltration mit Membranen" 1994 , VCH VERLAG , WEINHEIM, DE XP002141211 205920 Seite 188, letzter Absatz -Seite 189, Absatz 1 Abbildungen 5-2
- PATENT ABSTRACTS OF JAPAN vol. 018, no. 575 (C-1268), 4. November 1994 (1994-11-04) -& JP 06 210295 A (HITACHI PLANT ENG & CONSTR CO LTD;OTHERS: 01), 2. August 1994 (1994-08-02) -& DATABASE WPI Derwent Publications Ltd., London, GB; AN 1994-282742 XP002141213
- PATENT ABSTRACTS OF JAPAN vol. 1995, no. 10, 30. November 1995 (1995-11-30) -& JP 07 185269 A (HITACHI PLANT ENG & CONSTR CO LTD), 25. Juli 1995 (1995-07-25) -& DATABASE WPI Derwent Publications Ltd., London, GB; AN 1995-288176 XP002141214
- PATENT ABSTRACTS OF JAPAN vol. 015, no. 445 (C-0884), 13. November 1991 (1991-11-13) -& JP 03 188926 A (KUBOTA CORP), 16. August 1991 (1991-08-16) -& DATABASE WPI Derwent Publications Ltd., London, GB; AN 1991-285216 XP002141215
- PATENT ABSTRACTS OF JAPAN vol. 017, no. 413 (C-1092), 3. August 1993 (1993-08-03) -& JP 05 084429 A (TOTO LTD), 6. April 1993 (1993-04-06) -& DATABASE WPI Derwent Publications Ltd., London, GB; AN 1993-148591 XP002141216
- PATENT ABSTRACTS OF JAPAN vol. 017, no. 685 (C-1142), 15. Dezember 1993 (1993-12-15) -& JP 05 228349 A (HITACHI PLANT ENG & CONSTR CO LTD;OTHERS: 01), 7. September 1993 (1993-09-07) -& DATABASE WPI Derwent Publications Ltd., London, GB; AN 1993-316728 XP002141217
- PATENT ABSTRACTS OF JAPAN vol. 010, no. 178 (C-355), 21. Juni 1986 (1986-06-21) -& JP 61 025607 A (SANKI ENG CO LTD), 4. Februar 1986 (1986-02-04) -& DATABASE WPI Derwent Publications Ltd., London, GB; AN 1986-073817 XP002141218

## Beschreibung

Die Erfindung betrifft ein Verfahren zur Querstromfiltration mit Membranscheiben, die rotieren, wobei das durch die Membranscheibe(n) hindurchgeleitete Filtrat im hohlen Sohelbenkörper radial zur Rotationsachse geleitet und dort durch die Hohlwelle nach außen geführt wird sowie die Membranscheiben gleiche Drehrichtung aufweisen und im Bereich der Überdeckung von mindestens zwei Membranscheiben eine Turbulenz an der Membranoberfläche bewirkt wird.

Es sind Verfahren und Vorrichtungen bekannt, bei denen durch feststehende Membranen wie z.B. Rohrmembranen oder feststehenden Membranscheiben Flüssigkeiten gereinigt werden. Bei Membranscheiben wird auf einer Seite des Umfanges das Filtrat zugeführt und auf der anderen Seite das Konzentrat abgeleitet. Das Permeat wird nach Durchgang durch die Membran abgeführt. Das Problem bei Rohrmembranen besteht darin, daß nur eine geringe Filterfläche pro Raumeinheit eingesetzt werden kann. Welters muß das Filter nach einiger Zeit rückgespült werden, um wieder die volle Filtrationsleistung zu erreichen. Bei großen Filtrationsleistungen von mehr als 5 - 10 m³/h müssen sehr viele Module parallel bzw. In Serie geschaltet werden, damit die erforderliche Filterfläche erreicht wird. Das verursacht einen hohen Verrohrungsaufwand und einen enormen Platzbedarf. Hohe Druckverluste in den Retentatkanälen (Zufuhr des zu filtrierenden Rohwassers) der Module erfordern hohe Pumpleistungen. Es zeigt z.B. die JP 7-75722 (Agency of Ind.) ein Filter mit mehreren Membranscheiben, bei denen die Flüssigkeit im Scheibenkörper zur Rotationsachse und dort durch die Hohlwelle nach außen geführt wird. Der Scheibenkörper scheint aus einem homogenen Polypropylenkörper (ohne Kanäle) zu bestehen. Das System arbeitet mit Unterdruck (operating pressure 0.5 kg/cm²). Nachteilig sind hier der große Strömungswiderstand im Scheibenkörper und bei der Abfuhr des Filtrates mittels Vakuum. Die JP 6-210295 (Hitachi Plant) beschreibt eine Flockungs- und Filtriereinrichtung. Es handelt sich um ein offenes System, bei dem das Filtrat mittels Vakuum abgesaugt wird. Dadurch soll das Risiko von Verstopfungen vermieden werden. Weiters wird Flockungsmittel und auch ein pH-Wert regelndes Medium in die Suspension eingedüst. Es wird eine Umfangsgeschwindigkeit der Scheibe von 2.2 m/s angeführt. Dies führt bei der angeführten Betriebsweise und Überlappung zu Überströmgeschwindigkeiten im Bereich von ca. 1 m/s. Damit kann eine Abreinigung der Membranscheiben nur in unzureichendem Masse erfolgen.

Die Erfindung soll ein Filtermodul mit großer Filterfläche pro Raumeinheit und damit geringem Platzbedarf und ohne die Notwendigkeit der Rückspülung gewährleisten.

Die Erfindung ist dadurch gekennzeichnet, daß an der Membranoberfläche Überströrngeschwindigkeiten erzeugt werden, die im Bereich zwischen 1 und 5 m/s liegen und das Konzentrat (7) unter Überdruck abgeführt wird, wobei der Überdruck von 10 bis 14 bar beträgt.

Mit diesen Überströmgeschwindigkeiten läßt sich eine gute Reinigung der Membranoberfläche gewährleisten, wodurch der Aufbau einer Deckschicht verhindert oder zumindest minimiert wird. Durch den Überdruck auf der Konzentratseite der Membran, der im Gegensatz zu einem Vakuum auf der Permeatseite wesentlich höher sein kann, kann auch zusätzlich eine wesentlich bessere Filtration erzielt werden.

Eine vorteilhafte Ausgestaltung der Erfindung ist dadurch gekennzeichnet, daß die Scheiben einen rechteckigen Querschnitt aufweisen.

Eine günstige Weiterbildung der Erfindung ist dadurch gekennzeichnet, daß die Scheiben einen dreieckigen Querschnitt aufweisen.

Eine günstige Weiterbildung der Erfindung ist dadurch gekennzeichnet, daß die Membranscheiben unterschiedliche Drehzahl aufweisen. Damit kann eine gewünschte Überströmgeschwindigkeit bzw. Relativgeschwindigkeit im Überdeckungsbereich eingestellt werden.

Eine vorteilhafte Ausgestaltung der Erfindung ist dadurch gekennzeichnet, daß das Permeat unter Unterdruck abgeführt wird, wobei der Unterdruck bis zu 0,5 bar betragen kann. Dadurch wird ein entsprechendes Druckgefälle (transmembraner Druck) für die Filtration erzeugt.

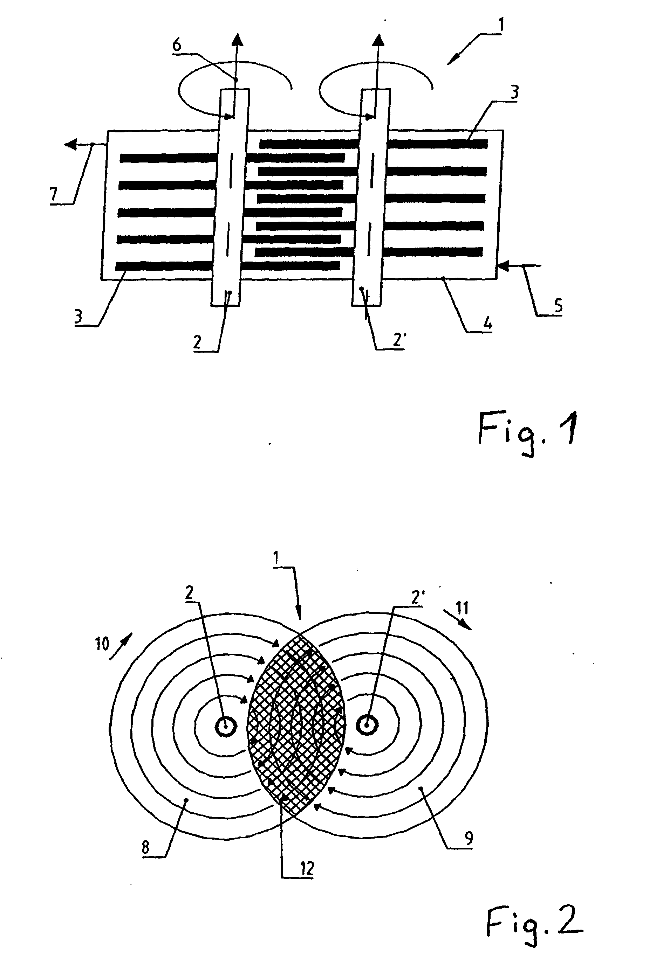

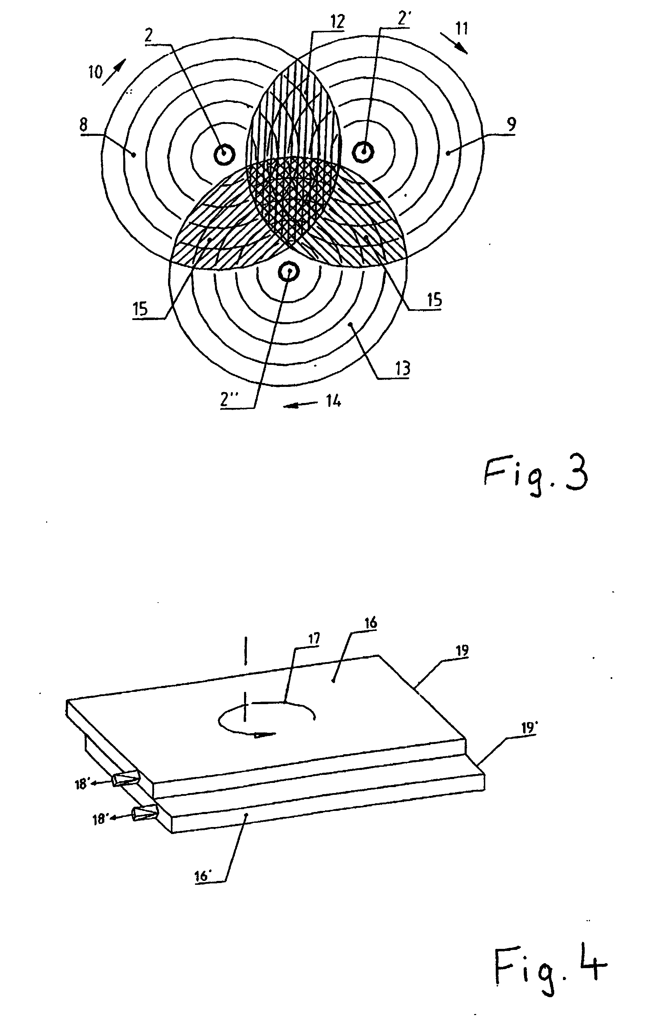

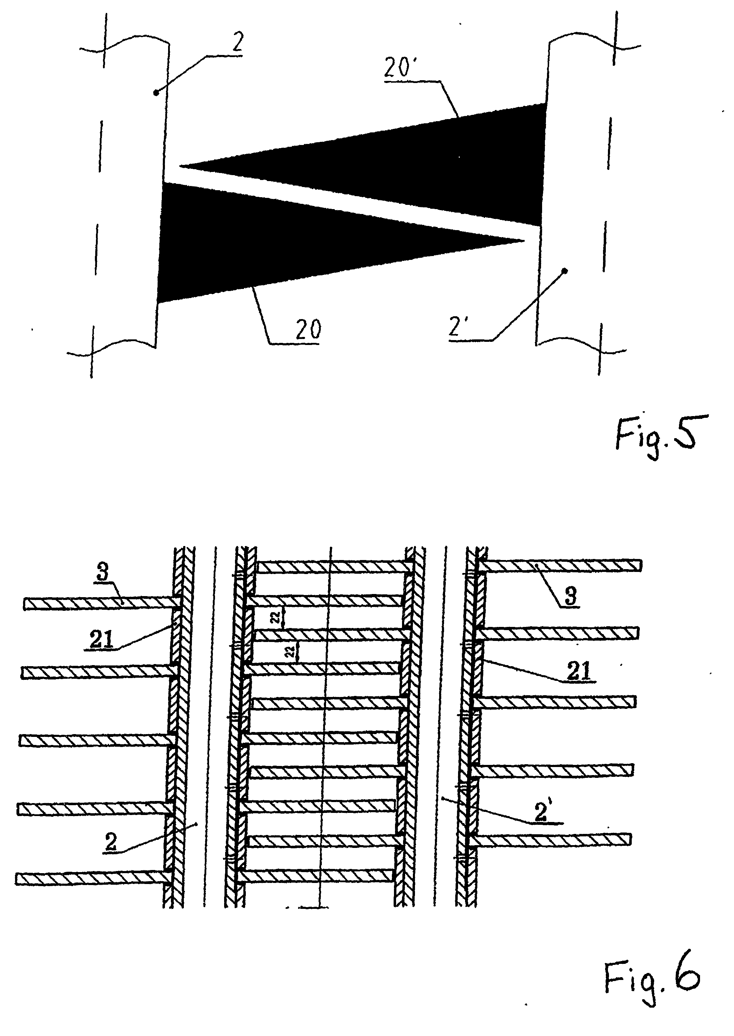

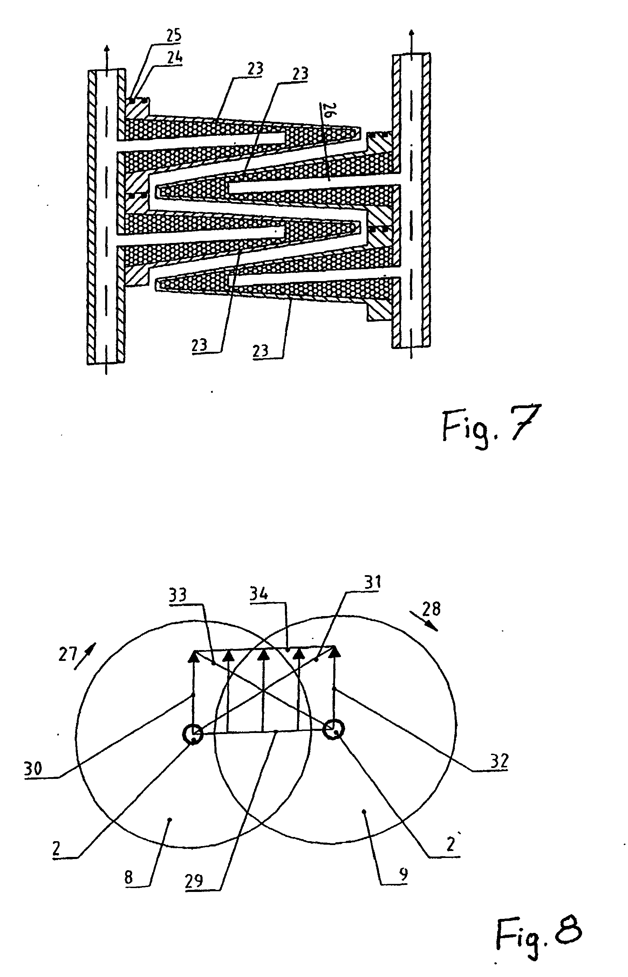

Die Erfindung wird nun anhand der Zeichnungen beispielhaft beschrieben, wobei Fig. 1 eine Variante der Erfindung, Fig. 2 eine Draufsicht auf Fig. 1, Fig. 3 eine Draufsicht einer weiteren Variante der Erfindung, Fig. 4 eine Variante der Membranformen, Fig. 5 eine Variante der Querschnittsformen, Fig. 6 eine Variante des Zusammenbaues der Membranen, Fig. 7 eine weitere Variante des Zusammenbaues der Membranen und Fig. 8 eine Geschwindigkeitsverteilung über den Membranscheiben darstellt.

Fig. 1 zeigt ein Crossflow-Filtrationsmodul 1 gemäß der Erfindung. Auf den Hohlwellen 2,2' werden hier jewells mehrere Membranscheiben 3 befestigt. Die zu filtrierende Flüssigkeit / Suspension wird über eine Leitung 5 einem Behälter 4 zugeführt. Hier ist ein geschlossener Behälter 4 dargestellt. Der Behälter kann auch offen sein, wobei die Membranen in die Flüssigkeit eingetaucht sind. Die Membranscheiben 3 weisen hier einen zylindrischen Querschnitt auf. Das Filtrat tritt durch die Membran in den hohlen Scheibenkörper 3 und wird als Permeat zur Mitte der Scheibe und durch die Hohlwelle 2, 2' über eine Leitung 6 nach außen geführt. Das gereinigte Konzentrat wird in weiterer Folge über Leitung 7 abgeführt. Das Membranmodul 1 kann sowohl mit konzentratseitigem Überdruck, als auch mit Unterdruck auf der Permeatseite betrieben werden. Dementsprechend kann das Modul 1 in geschlossenem Gehäuse 4 oder als getauchte Membranen eingesetzt werden. Der Überdruck kann dabei bis zu 10 - 14 bar betragen. Die Temperatur der zu filtrierenden Lösung liegt je nach Anwendungsfall bei bis zu 70 - 80 °C.

Die Membranscheiben 3 können sowohl aus anorganischen Körpern, wie auch aus Statzkörpern mit einer Polymermembran bestehen. Die Konstruktion eignet sich sowohl für eine chemische Reinigung der Membranen im Gleichstrombetrieb, als auch zur vollautomatischen Permeatrückspülung. Die Filtrationsmodule 1 können je nach Membran für Mikrofiltration (ab ca. 0,3 µm), Ultrafiltration, Nanofiltration (bis ca. 4000 Dalton) bis zur Umkehrosmose in den Bereichen der Trinkwasseraufbereitung, Prozesswasseraufbereitung, kommunalen und industriellen Abwasseraufbereitung und auch in der Produktfiltration eingesetzt werden. Es werden dabei Permeatleistungen von 10-20 m³/h pro Filtrationsmodul erreicht.

Fig. 2 zeigt eine Draufsicht auf das Filtrationsmodul 1 der Fig. 1. Man erkennt hier die Hohlwellen 2, 2', die der Permeatabfuhr dienen. Um diese Hohlwellen 2, 2' rotieren eine Primär-Rotationsmembran 8 und eine Sekundär-Rotationsmembran 9. Primär-Rotationsmembran 8 dreht in Richtung 10 und Sekundär-Rotationsmembran 9 dreht in Richtung 11. Im Überschneidungsbereich 12 ergibt sich eine Turbulenz-Reinigungszone. Diese Turbulenz ergibt sich durch die im Überschneidungsbereich 12 gegenläufig drehenden Membranen. Durch diese Turbulenz wird ein zusätzlicher Reinigungseffekt auf der Membranoberfläche bewirkt. Die Turbulenzen können auch durch spezielle Strömungseinbauten erzeugt werden. Durch den mechanischen Antrieb der Membranscheiben 8 und 9, der turbulenten Strömung und durch die damit verbundene hohe spezifische Filtrationsleistung, werden sehr niedrige Betriebskosten erzielt. Der spezifische Leistungsbedarf für den Antrieb betragt ca. 2,5 KWh/m³ Permeat. Das chemische Reinigungsintervall kann je nach Anwendungsfall von derzeit etwa 50-100 Stunden auf etwa 200 - 500 Betriebsstunden erhöht werden.

Ist eine höhere Drehzahl erforderlich und muß daher der Scheibendurchmesser verringert werden, so werden zur Erzielung der mindestens gleichen Filterfläche mehrere Hohlwellen mit den daran befestigten Membranscheiben eingesetzt. Fig. 3 zeigt beispielhaft eine Variante mit drei Hohlwellen 2, 2', 2" und zugeordneten Membranscheiben 8, 10, 13. Durch die Rotation der Scheibe 13 in Richtung 14 ergibt sich eine weitere Turbulenz-Reinigungszone 15.

Fig. 4 zeigt eine Alternative zu den Membranscheiben, wobei hier als Membranen Platten 16, 16' eingesetzt werden. Während die Platte 16' feststehend montiert ist, wird die Platte 16 entsprechend dem Pfeil 17 exzentrisch oszillierend bewegt, so daß an den Membranoberflächen eine Turbulenz entsteht, durch die die Oberflächen weitestgehend frei von Ablagerungen gehalten werden. Die Permeatabfuhr erfolgt über Leitungen 18, 18', wobei zur besseren Abfuhr zusätzliche Leitungen 19, 19' an der gegenüberliegenden Seite der Platten 16, 16' angebracht sein können. Die Leitungen 18, 19, die mit der sich bewegenden Platte 16 verbunden sind, können dabei aus einem flexiblen Rohr bzw. aus entsprechenden Schläuchen vorgesehen sein.

Fig. 5 zeigt einen Ausschnitt aus einem Filtrationsmodul 1 in Seitenansicht. Hier sind die speziell ausgebildeten Membranscheiben 20, 20' in dreieckiger Querschnittsform zu erkennen. Neben dieser Form und der rechteckigen Querschnittsform gemäß Fig. 1 können die Membranscheiben auch frei definierte Querschnittsformen für spezielle Ausführungen ausweisen. Dreieckige Querschnittsformen werden auch dort eingesetzt, wo auf möglichst engem Raum eine große Filterfläche erforderlich ist. Der Querschnitt der Scheiben 20, 20' ist dabei so bemessen, daß er sich in Richtung des Permeatabflusses zur. Hohlwelle 2, 2' hin und entsprechend der größeren Permeatmenge erweitert. Die Vorteile des erfindungsgemäßen Filtrationsmoduls gegenüber Membranmodulen nach dem Stand der Technik liegen vor allem im geringeren Platzbedarf, geringerem Verrohrungsaufwand, niedrigerem Energieverbrauch. Weiters ist keine Kreislaufpumpe zur Erzeugung des Crossflow mit den entsprechenden Kosten erforderlich.

Fig. 6 zeigt den Schnitt durch den Aufbau eines Filtrationsmoduls. An den Hohlwellen 2, 2' sind beispielsweise im Querschnitt rechteckige Membranscheiben 3 angeordnet. Zur Einstellung des Abstandes der Membranscheiben 3 voneinander dienen um die Hohlwellen 2, 2' angeordnete Hülsen 21, die austauschbar sind. Durch die Länge dieser Hülsen 21 läßt sich der Retentatkanal 22, d.h. der Abstand zweier an unterschiedlichen Hohlwellen 2, 2' befestigten Membranscheiben 3 im Überdeckungsbereich, entsprechend den Erfordernissen einstellen. Die Breite des Retentatkanals 22 ist im wesentlichen abhängig von der Viskosität des Retentates.

Alternativ können die Membranscheiben 23 direkt aneinanderstoßen, wie in Fig. 7 dargestellt. Bei geeigneter Wahl der Querschnittsform lassen sich hier durch eine Nut 24 mit Dichtring 25 die Membranscheiben 23 direkt aneinander auf die Hohlwelle 2, 2' aufschieben. Der Retentatkanal 26 ergibt sich dann durch die Gestaltung der Membranscheiben 23.

Fig. 8 zeigt eine Draufsicht analog zu Fig. 2. Membranscheibe 8 dreht hier in Richtung 27 und Membranscheibe 9 in Richtung 28. Über der Verbindungslinie 29 der beiden Hohlwellen 2, 2' ist hier die Umfangsgeschwindigkeit der einzelnen Membranscheiben 8, 9 sowie die sich daraus ergebende Relativgeschwindigkeit aufgetragen. Für Scheibe 8 ergibt sich eine maximale Umfangsgeschwindigkeit 30, die zur Achse hin auf Null geht. Somit ergibt sich eine Geschwindigkeitsverteilung 31. Analog ergibt sich für die Scheibe 9 bei einer maximalen Umfangsgeschwindigkeit 32 eine Geschwindigkeitsverteilung 33. Die resultierende Relativgeschwindigkeit 34 ist dann bei gleicher Drehzahl der beiden Membranscheiben konstant. Durch Variation der Drehzahlen läßt sich eine gewünschte Relativgeschwindigkeit einstellen.

### Ausführungsbeispiel

In einer Anlage, die anorganische Membranscheiben (50 nm Porengröße, ⌀ 152 mm) enthält, wurden verschiedenste Medien filtriert bzw. aufkonzentriert.

Bei den Versuchen mit Weißwasser aus dem Bereich der Papiermaschine ergab sich bei einer Eingangskonzentration von 0,1 % TS und einer Endkonzentration von 11 % TS eine durchschnittliche spezifische Filtrationsleistung von 270 l/m² h. Die Überströmgeschwindigkeit betrug dabei 2 m/s.

Das erforderliche chemische Reinigungsintervall ergab sich mit 450 Stunden.

Üblicherweise werden Überströmgeschwindigkeiten zwischen 1 und 5 m/s und Drücke zwischen 0,5 und 6 bar gewählt. Dabei hat sich gezeigt, daß je nach Medium und Inhaltsstoffen, je nach Drehzahl und Abstand der Membranscheiben bzw. je nach eingestellten Fittrationsdrücken und -temperaturen ein höherer Flux (spezifische Membranleistung) als bei herkömmlichen Crossflow Betrieb mit Rohrmembranen erzielt wurde.

## Patentansprüche

1. Verfahren zur Querstromfiltration mit Membranscheiben, die rotieren, wobei das durch die Membranscheibe(n) hindurchgeleitete Filtrat im hohlen Scheibenkörper (3) radial zur Rotationsachse geleitet und dort durch die Hohlwelle (2, 2') nach außen geführt wird sowie die Membranscheiben (3, 8, 9) gleiche Drehrichtung (10, 11) aufweisen und im Bereich der Überdeckung (12) von mindestens zwei Membranscheiben (8, 9) eine Turbulenz an der Membranoberfläche bewirkt wird, **dadurch gekennzeichnet, dass** an der Membranoberfläche Überströmgeschwindigkeiten erzeugt werden, die im Bereich zwischen 1 und 5 m/s liegen und das Konzentrat (7) unter Überdruck abgeführt wird, wobei der Überdruck von 10 bis 14 bar beträgt.

2. Verfahren nach Anspruch 1, wobei die Membranscheiben rechteckigen Querschnitt aufweisen.

3. Verfahren nach Anspruch 1, wobei die Membranscheiben dreieckigen Querschnitt ausweisen

4. Verfahren nach Anspruch 3 oder 4, **dadurch gekennzeichnet, daß** die Membranscheiben unterschiebliche Drehzahl aufweisen.

5. Verfahren nach einem der Ansprüche 1 bis 4, **dadurch gekennzeichnet, dass** das Permeat (6) unter Unterdruck abgeführt wird.

6. Verfahren nach Anspruch 5, **dadurch gekennzeichnet, daß** der Unterdruck bis zu 0,5 bar beträgt.

## Claims

1. Process for cross-flow filtration with rotating membrane discs, with the filtrate that was passed through the membrane disc(s) being routed in the hollow disc body (3) radially to the rotational axis, and there being led outward through the hollow shaft (2, 2'), and the membrane discs (3, 8, 9) having the same sense of rotation (10, 11) and a turbulence being created at the membrane surface in the area of overlapping (12) of at least two membrane discs (8, 9), **characterized by** overflow speeds being created at the surface of the membranes which are in the range between 1 and 5 m/sec and by the concentrate (7) being discharged at an overpressure, where the overpressure is 10 to 14 bar.

2. Process according to Claim 1, **characterized by** the membrane discs having a rectangular cross section.

3. Process according to Claim 1, **characterized by** the membrane discs having a triangular cross section.

4. Process according to one of the Claims 1 to 3, **characterized by** the membrane discs having different rotational speeds.

5. Process according to one of the Claims 1 to 4, **characterized by** the permeate (6) being discharged at a vacuum.

6. Process according to Claim 5, **characterized by** the vacuum being up to 0.5 bar.

## Revendications

1. Procédé de filtration à courant transversal, avec des disques membranes rotatives, le filtrat ayant passé à travers le ou les disque(s) à membrane dans le corps creux (3) de disque étant radialement vers l'axe de rotation et là, à travers l'arbre creux (2, 2'), et les disques à membrane (3, 8, 9) ayant le même sens de rotation (10, 11) et une turbulence étant créée à la surface de la membrane dans la zone de recouvrement (12) d'au moins deux disques à membrane (8, 9), **caractérisé en ce que** des vitesses de débordement sur la surface des membranes sont créées qui se situent entre 1 et 5 m/sec et le concentré (7) étant déchargé à une pression manométrique, cette pression allant de 10 et 14 bar.

2. Procédé selon la revendication 1, **caractérisé en ce que** les disques à membrane ont une section transversale rectangulaire.

3. Procédé selon la revendication 1, **caractérisé en ce que** les disques à membrane ont une section transversale triangulaire.

4. Procédé selon une des revendications 1 à 3, **caractérisé en ce que** les disques à membrane ont une vitesse de rotation différente.

5. Procédé selon une des revendications 1 à 4, **caractérisé en ce que** le permeat (6) est déchargé sous vide.

6. Procédé selon la revendication 5, **caractérisé en ce que** ce vide va jusqu'à 0,5 bar.
